# EUROPEAN PATENT SPECIFICATION

(11) **EP 1 521 239 B1**
(45) Date of publication and mention of the grant of the patent: **16.01.2008**
(21) Application number: 04023117.7
(22) Date of filing: 29.09.2004
(51) Int. Cl.: G10L 15/26

(54) **Multi-modal input form with dictionary and grammar**
Multimodales Eingabeformular mit Wörterbuch und Grammatik
Forme d'entrée multimodal avec dictionnaire et grammaire

(30) Priority: 01.10.2003 US 676590
(43) Date of publication of application: 06.04.2005
(73) Proprietor: Alcatel Lucent, 75008 Paris (FR)
(72) Inventor: Badt, Sig Harold, Jr., Richardson TX 75081 (US)
(74) Representative: Schmidt, Werner Karl

(56) References cited:
- US-A1- 2003 097 265
- TATSUYA KAWAHARA KATSUAKI TANAKA SHUJI DOSHITA: "Domain-Independent Platform of Spoken Dialogue Interfaces for Information Query" ESCA TUTORIAL AND RESEARCH WORKSHOP: INTERACTIVE DIALOGUE IN MULTI-MODAL SYSTEMS JUN 22-25 1999, KLOSTER IRSEE, GERMANY, 22 June 1999 (1999-06-22), pages 1-4, XP007005661
- SENEFF S: "Response planning and generation in the mercury flight reservation system" COMPUTER SPEECH AND LANGUAGE, ACADEMIC PRESS, LONDON, GB, vol. 16, no. 3-4, July 2002 (2002-07), pages 283-312, XP004418849 ISSN: 0885-2308

## Description

### BACKGROUND OF THE INVENTION

### Technical Field:

The present invention relates generally to voice recognition technology and more specifically to a method for providing guidance to a user as to which verbal inputs are recognizable by a voice recognition system.

### Description of Related Art:

With the current state of the art, it is sometimes only possible for an automatic speech recognition (ASR) system to recognize a fixed set of a few hundred words and phrases at a given time. For example, at a certain moment in a human/computer dialog, it may be possible for the ASR system to recognize the phrase, "Book a flight from Boston to Chicago," but it may not be possible to recognize, "Book a seat from Boston to Chicago." Thus, at a given point in a human/computer dialog the ASR system can only recognize phrases that conform to a limited dictionary and grammar.

Because of these limitations in ASR software, the human user is only allowed to say certain things at certain points in the dialog. The problem is that, a human user does not always know what is the acceptable dictionary and grammar at the current point in the human/computer dialog. For example, at a given point in a dialog a user may not know if he or she should say "Book a flight" or "Book a seat."

A known interface for a human/computer dialogue system is disclosed in ATSUYA KAWAHARA, KATSUAKI TANAKA, SHUJI DOSHITA: "Domain-Independent Platform of Spoken Dialogue Interfaces for Information Query" ESCA TUTORIAL AND RESEARCH WORKSHOP: INTERACTIVE DIALOGUE IN MULTI-MODAL SYSTEMS JUNE 22-25 1999, KLOSTER IRSEE, GERMANY, 22 June 1999, pages 1-4, XP007005661.

Several solutions have been proposed for smoothing over the difficulties encountered with ASR. A system can be designed in such a way that it is obvious to most human users what should be said at every point in the human/computer dialog.

Alternatively, a system designer may try to consider all possible things a human user might want to say at any point in the dialog. Another solution is to train the human user in the use of the system.

All of the above solutions may fail. It may not be obvious to a user as to what grammar is appropriate at particular points of a human/machine dialog. Additionally, the universe of choices that the human user may say is so large the system designer cannot explicitly list them all. Many users of the system may have no access to training.

Therefore, it would be desirable to have a voice recognition system that provides a user with allowable verbal responses at specific points in a human/machine dialog.

### SUMMARY OF THE INVENTION

The present invention as claimed in the appended claims provides a voice recognition system with a graphical user interface (GUI) that visually prompts a user for expected inputs that the user can choose to speak at designated points in a dialog to improve the overall accuracy of the voice recognition system. By reading the GUI window, the user can know what the recognizable grammar and vocabulary are for spoken input at any moment in the dialog. The GUI and voice interface can be built from a single dictionary and grammar specification. Prompts that represent non-terminal tokens in the grammar are replaced with one of a set of other prompts in the grammar in response to spoken input. The GUI may further comprise pull-down menus as well as separate windows that open and close in response to user input. The system may also use Text To Speech (TTS) technology to verbally prompt the user to provide certain spoken input.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
- Figure 1: is a pictorial representation of a data processing system in which the present invention may be implemented;
- Figure 2: is a block diagram of a data processing system in which the present invention may be implemented;
- Figures 3A-3F: show graphical user interface windows for use in a multi-modal automatic speech recognition (ASR) system in accordance with the present invention;
- Figure 4: illustrates a voice-only dialog using the same dictionary and grammar as that used in Figures 3A-3F;
- Figure 5: illustrates a more complex voice-only dialog in which the user knows some, but not all, of the dictionary and grammar that can be recognized by the ASR system;
- Figure 6: illustrates a voice-only dialog using reserved words; and
- Figure 7: illustrates another example of a voice-only dialog using a reserved word.

### DETAILED DESCRIPTION OF THE INVENTION

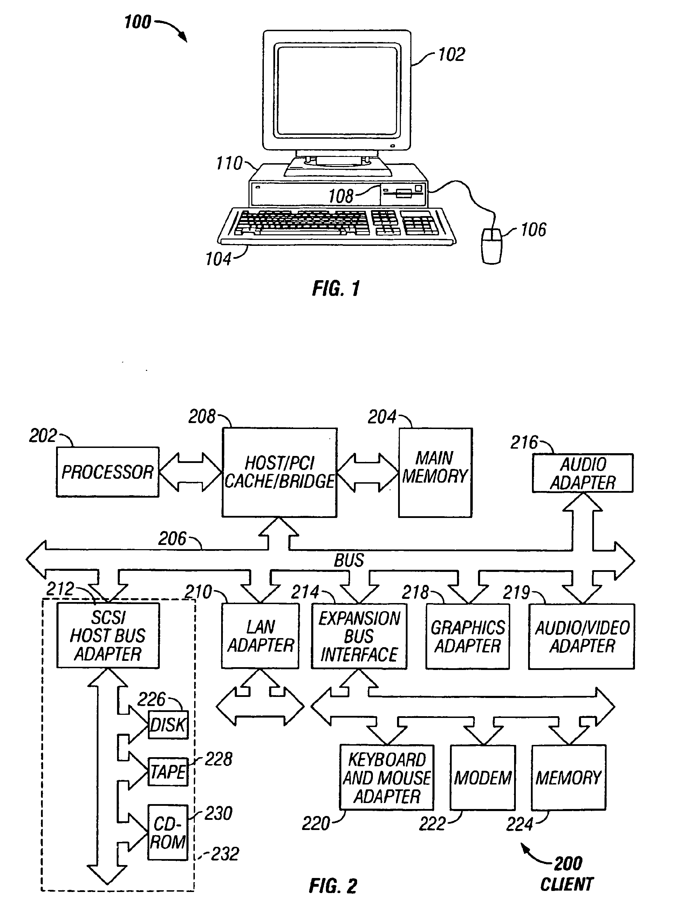

With reference now to the figures and in particular with reference to Figure 1, a pictorial representation of a data processing system in which the present invention may be implemented is depicted in accordance with a preferred embodiment of the present invention. A computer 100 is depicted which includes a system unit 110, a video display terminal 102, a keyboard 104, storage devices 108, which may include floppy drives and other types of permanent and removable storage media, and mouse 106. Additional input devices may be included with personal computer 100, such as, for example, a joystick, touchpad, touch screen, trackball, microphone, and the like. Computer 100 can be implemented using any suitable computer, such as an IBM RS/6000 computer or IntelliStation computer, which are products of International Business Machines Corporation, located in Armonk, New York. Although the depicted representation shows a computer, other embodiments of the present invention may be implemented in other types of data processing systems, such as a network computer. Computer 100 also preferably includes a graphical user interface that may be implemented by means of systems software residing in computer readable media in operation within computer 100.

With reference now to Figure 2, a block diagram of a data processing system is shown in which the present invention may be implemented. Data processing system 200 is an example of a computer, such as computer 100 in Figure 1, in which code or instructions implementing the processes of the present invention may be located. Data processing system 200 employs a peripheral component interconnect (PCI) local bus architecture. Although the depicted example employs a PCI bus, other bus architectures such as Accelerated Graphics Port (AGP) and Industry Standard Architecture (ISA) may be used. Processor 202 and main memory 204 are connected to PCI local bus 206 through PCI bridge 208. PCI bridge 208 also may include an integrated memory controller and cache memory for processor 202.

Additional connections to PCI local bus 206 may be made through direct component interconnection or through add-in boards. In the depicted example, local area network (LAN) adapter 210, small computer system interface SCSI host bus adapter 212, and expansion bus interface 214 are connected to PCI local bus 206 by direct component connection. In contrast, audio adapter 216, graphics adapter 218, and audio/video adapter 219 are connected to PCI local bus 206 by add-in boards inserted into expansion slots. Expansion bus interface 214 provides a connection for a keyboard and mouse adapter 220, modem 222, and additional memory 224. SCSI host bus adapter 212 provides a connection for hard disk drive 226, tape drive 228, and CD-ROM drive 230. Typical PCI local bus implementations will support three or four PCI expansion slots or add-in connectors.

An operating system runs on processor 202 and is used to coordinate and provide control of various components within data processing system 200 in Figure 2. The operating system may be a commercially available operating system such as Windows 2000, which is available from Microsoft Corporation. An object oriented programming system such as Java may run in conjunction with the operating system and provides calls to the operating system from Java programs or applications executing on data processing system 200. "Java" is a trademark of Sun Microsystems, Inc. Instructions for the operating system, the object-oriented programming system, and applications or programs are located on storage devices, such as hard disk drive 226, and may be loaded into main memory 204 for execution by processor 202.

Those of ordinary skill in the art will appreciate that the hardware in Figure 2 may vary depending on the implementation. Other internal hardware or peripheral devices, such as flash ROM (or equivalent nonvolatile memory) or optical disk drives and the like, may be used in addition to or in place of the hardware depicted in Figure 2. Also, the processes of the present invention may be applied to a multiprocessor data processing system. For example, data processing system 200, if optionally configured as a network computer, may not include SCSI host bus adapter 212, hard disk drive 226, tape drive 228, and CD-ROM 230, as noted by dotted line 232 in Figure 2 denoting optional inclusion. In that case, the computer, to be properly called a client computer, must include some type of network communication interface, such as LAN adapter 210, modem 222, or the like.

As another example, data processing system 200 may be a stand-alone system configured to be bootable without relying on some type of network communication interface, whether or not data processing system 200 comprises some type of network communication interface. As a further example, data processing system 200 may be a personal digital assistant (PDA), which is configured with ROM and/or flash ROM to provide non-volatile memory for storing operating system files and/or user-generated data.

The depicted example in Figure 2 and above-described examples are not meant to imply architectural limitations. For example, data processing system 200 also may be a notebook computer or hand held computer in addition to taking the form of a PDA. Data processing system 200 also may be a kiosk or a Web appliance.

The processes of the present invention are performed by processor 202 using computer implemented instructions, which may be located in a memory such as, for example, main memory 204, memory 224, or in one or more peripheral devices 226-230.

Computer users today are familiar with window-oriented graphical user interfaces (GUIs) or point-and-click interfaces. GUIs can be extended to include multi-modal interfaces, wherein the user can input information into the computer by using the mouse and keyboard in the conventional manner or by means of spoken, gestured, or hand written input. The user can also receive graphical or spoken output from the computer by means of GUIs and Text To Speech (TTS) technology.

A software module that makes it possible for a computer to understand spoken input is called an Automatic Speech Recognition (ASR) system. With the current state of the art, it is sometimes only possible for an ASR system to recognize a fixed set of few hundred words and phrases at a given time. For example, at a certain moment in a human/computer dialog, it may be possible for the ASR system to recognize the phrase, "Book a flight from Boston to Chicago," but it may not be possible to recognize, "Book a seat from Boston to Chicago." At a given point in a human/computer dialog the ASR system can only recognize phrases that conform to a limited dictionary and grammar.

With voice input, a human user does not always know what is the acceptable vocabulary and grammar at the current point in the human/computer dialog. Continuing the above example, at a given point in a dialog a user may not know if he or she should say "Book a flight" or "Book a seat."

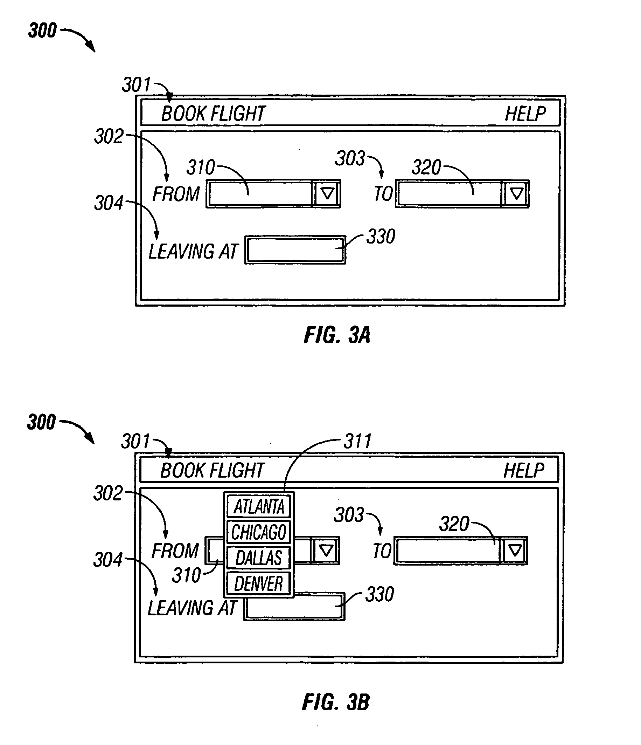

Referring now to Figure 3A, a graphical user interface window for use in a multi-modal ASR system is depicted in accordance with the present invention. By reading the GUI window 300, the user can know what is the recognizable dictionary and grammar for spoken input at this moment in the dialog. In a conventional GUI window there is a bar across the top of the window (sometimes called the grab bar) that contains on its left side the name of the window. In Figure 3A, the name 301 of the window 300 is "Book flight." The user reads the window 300 from left to right and top to bottom, so any recognizable spoken input phrase for this window starts with the words "Book Flight". After "Book Flight" 301, the user goes down to the next level and reads the word "from" 302.

In Figure 3A, after the word "from" 302, is a GUI object called a pull-down input field 310. The user may not know what to say when he or she encounters this field. At this point, the user can say the reserved word, "list". The system responds by displaying a list 311 of all recognizable inputs at this point in the dialog, as illustrated in Figure 3B. The user speaks one of the words in this list 311. If a user encounters the pull-down input field 303, and the user already knows a recognizable input word, he or she can simply say the input word directly. Of course the GUI window 300 can also be used in the conventional point-and-click manner, by using the pull-down input field 310 with a mouse, stylus, or keyboard.

To the right of the pull-down input field 310 is the word "to" 303 and its associated pull-down input field 320, which operates in the same manner as the pull-down field 310 described above.

On the bottom line of the GUI window 300 is the label "leaving at" 303, with an associated text-input field 330. Again, the user may not know what the system can recognize as input to this field. At this point, the user can use a reserved word, which is an instruction from the user to the dialog controller. The dialog controller is a software-implemented control system that regulates the multi-modal dialog between the human user and the computer. The dialog controller performs functions such as loading the ASR system with the appropriate dictionary and grammar at the appropriate time and collecting information input by the user.

The following is an example list of reserved words and their respective meanings to the dialog controller:
- What: What type of input is allowed at this time? or What input is allowed at this time?
- Done: This scenario is finished.
- And: Do again.
- Review: Speak back to me what I just input.
- List: List all possible things I can say at this time.

Of course, other reserve words are possible, depending on the subject of the dialog and the desired complexity of the system in question.

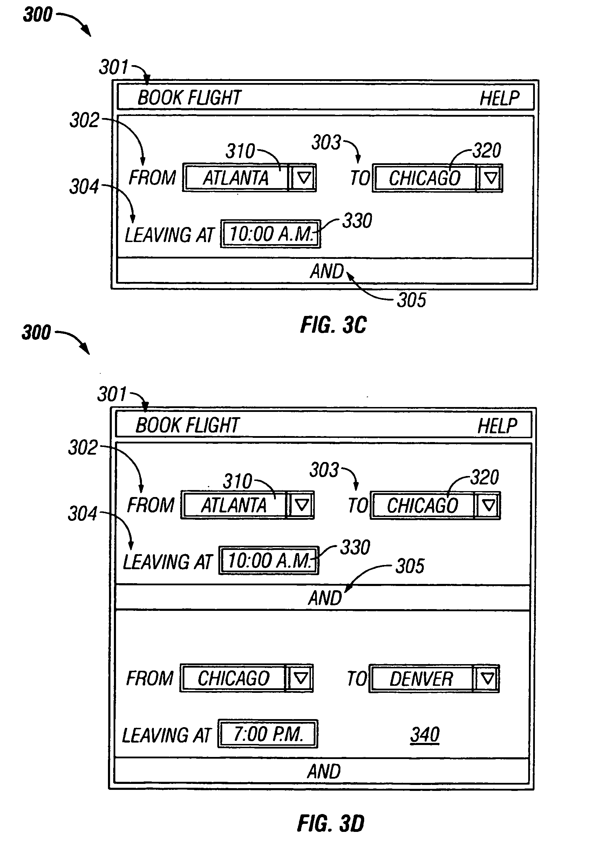

In the example in Figure 3A, when the user comes to the "leaving at" label 304, he can say the reserved word, "what". The system responds by speaking the words "time of day." An alternative approach would be to put the words "time of day" directly above or below the field 330 (not shown). The user can then speak the time of day. Figure 3C shows the text-input field 330 with a selected time of 10:00 AM.

Also show in Figure 3C is a bar 305 across the bottom of the window 300 that contains the word "and". When the user reaches the end of the window, the user can either say "done" or "and." If the user says "done," the window is complete. If the user says "and," the window 300 expands as shown in Figure 3D. The expanded section 340 of the GUI window 300 allows the user to book another flight using the same process as described above. Again, when the user reaches the bottom, he or she can say "done" to complete the process or "and" to book yet another flight.

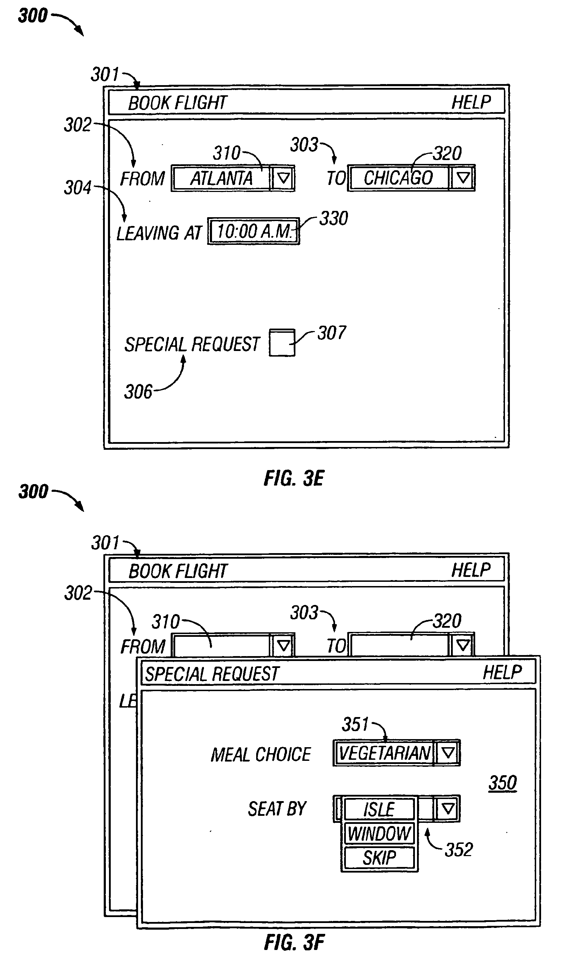

Figure 3E shows a version of the GUI window 300 that gives the user the option of making a special request 306. Next to the "special request" prompt 306 is an icon 307 that represents a new window. The icon 307 can be anywhere in the GUI window 300. If the user reaches the bottom of the window 300 shown in Figure 3E, and has no special requests, the user can simply say the reserved word "done."

However, if the user has a special request he or she would like to make (e.g., type of meal), the user can say the words "special request" and a new window 350 appears, as illustrated in Figure 3F. The name of the new window 350 is also "special request". The new window 350 incorporates pull-down input fields 351, 352 similar in function to pull-down field 310 described above. When the user finishes inputting data in the new window 350, input focus returns to the original window shown in Figure 3E, just after the new window icon 307.

In order to assist in the human/computer dialog, special signals may have to be passed back and forth between the human user and the computer. Some of these signals indicate that one or the other wants to begin (or finish) speaking. For example, the human speaker may press and release a designated button to indicate that he or she is about to begin speaking.Alternatively, the speaker may press and hold down the button until he or she is finished speaking. The button may be a physical button or a GUI object. The computer may also display a "microphone open" indication when it can recognize spoken input from the user.

The computer may output a sound of some kind such as a chime or a tone when it is about to begin speaking and a second sound when it is finished speaking. These signals may or may not be necessary depending on the abilities of the system in question. The computer may also give a visual indication of the item on the screen that corresponds to the current point in the dialog. The location on the screen that corresponds to the current point in the dialog may be indicated by a moving arrow or highlight.

The same dictionary and grammar used for a multi-modal GUI interface of the kind described above can also be used for a voice-only interface. A voice-only dialog is the kind that can be conducted over a telephone with no graphic display.

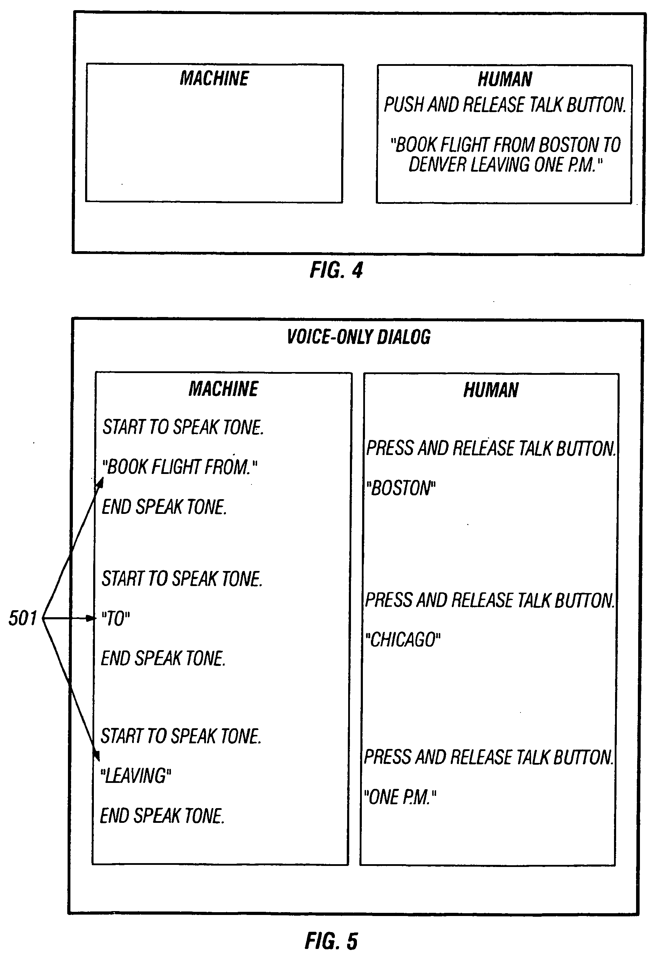

Figure 4 shows a voice-only dialog using the same dictionary and grammar as that used in Figures 3A-3F but conducted entirely with voice interaction. Figure 4 illustrates a simple voice-only dialog in which the speaker knows the dictionary and grammar that can be recognized by the ASR system before the dialog begins. In this example, the user knows the correct input that the system can recognize and simply speaks the necessary words.

Figure 5 illustrates a more complex voice-only dialog in which the user knows some, but not all, of the dictionary and grammar that can be recognized by the ASR system before the dialog begins. Again, the example uses the same dictionary and grammar used in Figures 3A-3F. In this example, the computer provides auditory prompts 501 to the user by speaking the "constant text" that the user would have otherwise have read from the screen. By relying on the auditory prompts 501 the user does not need to know all of the recognizable dictionary and grammar in advance.

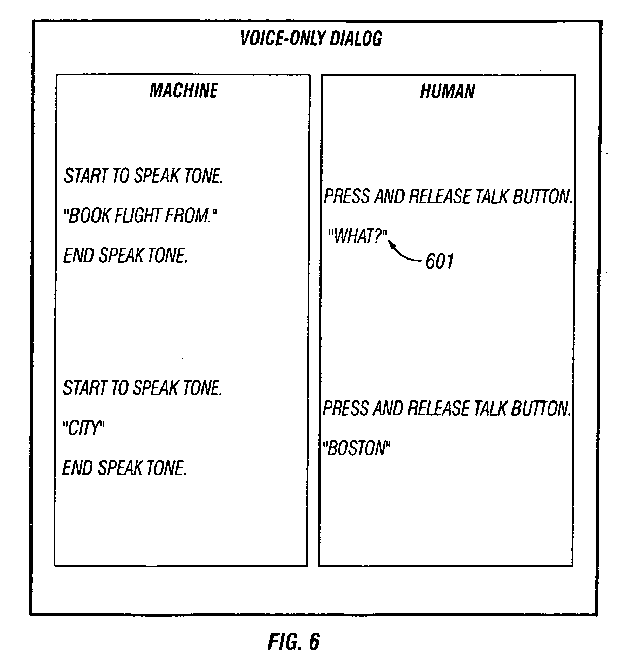

Figure 6 is an example of a voice-only dialog using reserved words. Again, the dictionary and grammar are the same as the examples above. The reserved word 601 provides another level of functionality by allowing the user to prompt the computer for further guidance as to the correct type of input. When the user says "what", the computer replies with the type of input expected next (i.e. city). However, in this example the system only tells the user the type of input that is expected but does not give an explicit list of all possible inputs that fall within that type.

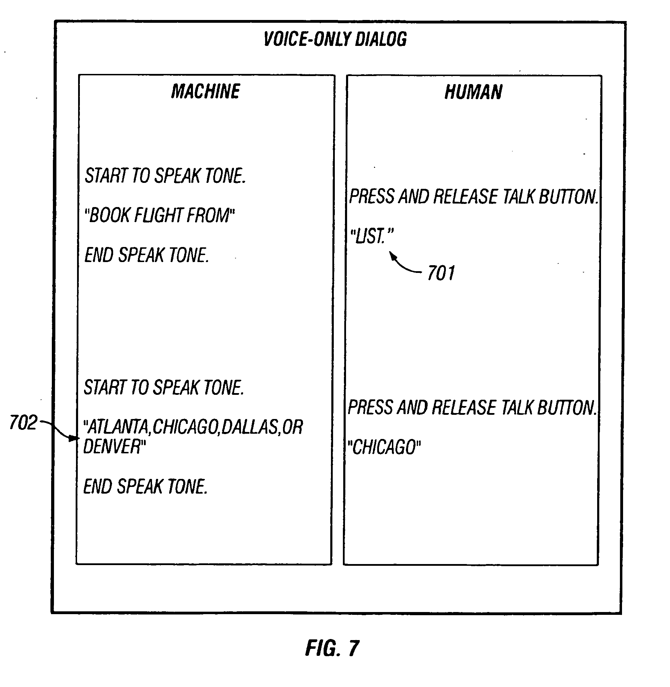

Figure 7 shows another example of a voice-only dialog using reserved words. In this example, the reserved word 701 is "list". In response to this reserved word, the computer replies with an explicit list 702 of all possible inputs at this point in the dialog.

It is possible to automatically build a GUI interface, a GUI plus voice interface, and a voice-only interface of the kinds described above from a single dictionary and grammar specification. A person skilled in the art can design a single formal language that can serve as input to an automatic multi-modal interface builder. It is also possible to specify the dictionary and grammar using a drag-and-drop automatic GUI builder similar to the kind commonly used in the art today.

The following is an example of a program that can produce the dialogs described above:

```
    Main ReserveFlightDialog
    Dialog ReserveFlightDialog
         {
         Repeatable
         Title "Book Flight"
         Body <FromCity> <ToCity> <LeavingTime>
    <SpecialRequestDialog>
         }

    ChoiceList FromCity
         {
         Title "from"
         Entries "Atlanta", "Chicago", "Dallas", "Denver"
         }

    ChoiceList ToCity
         {
         Title "to"
         Entries "Atlanta", "Chicago", "Dallas", "Denver"
         }

    TimeField LeavingTime
         {
         Title "leaving at"
         }

    Dialog SpecialRequestDialog
         Title "special request"
         Body <MealChoice> <SeatBy>
         }

    ChoiceList MealChoice
         {
         Title "meal choice"
         Entries "Vegetarian", "Low Fat", "Kosher"
         }

    ChoiceList SeatBy
         Title "seat by"
         Entries "Window", "Aisle", "Middle"
         }
```

A programmer can produce this program with a text editor. One can also build an Integrated Development Environment (IDE), which is a tool that helps write programs for a specific language (e.g., Visual Café for Java). An appropriate complier can then take the above program as input and produce the user interfaces described above. Such compliers are well known in the art.

Each prompt from the computer represents a token in the grammar specification that governs the human/machine dialog. If a prompt represents a non-terminal token, it is replaced with another prompt from the grammar in response to verbal input, which takes the user to the next defined step in the dialog. Using the example above in Figures 3A-3F, the prompts "from" and "to" represent non-terminal tokens that lead to subsequent dialog prompts after the user has provided verbal input. A terminal token relates to a natural stopping point in the dialog, after which no further input from the user is necessary. For example, in Figure 3E, the prompt for special requests might be a terminal token since no further input is necessary from the user in order to complete the booking of the flight.

The following features or combinations of features may also constitute further embodiments of the invention:
- A computer program product in a computer readable medium for use in a computer interface system, the computer program product comprising: first instructions for receiving audio input from a user; second instructions for automatic voice recognition; and third instructions for displaying a graphical user interface that prompts the user for expected inputs that the user can speak at designated points in a dialog according to a specified grammar; wherein prompts may specify the type of expected input; wherein prompts may specify words that are recognized by the system.
- The afore-described computer program product, wherein prompts that represent non-terminal tokens in the grammar are replaced with one of a set of other prompts in the grammar in response to spoken input.
- The afore-described computer program product, wherein the graphical user interface is built automatically from a single dictionary and grammar specification.
- The afore-described computer program product, further comprising: fourth instructions for outputting audio prompts for expected inputs.
- The afore-described computer program product, wherein a prompt may further comprise a second graphical user interface window.
- The afore-described computer program product, wherein the graphical user interface further comprises a pull-down menu.
- The afore-described computer program product, further comprising a set of reserved words that activate specified prompts when spoken by the user.

The following features or combinations of features may also constitute further embodiments of the invention:
- The method as described hereinbefore, further comprising: outputting audio prompts for expected inputs.
- The method as described hereinbefore, wherein a prompt may further comprise a second graphical user interface window.
- The method as described hereinbefore, wherein the graphical user interface further comprises a pull-down menu.
- The method as described hereinbefore, further comprising a set of reserved words that activate specified prompts when spoken by the user.

The description of the present invention has been presented for purposes of illustration and description, and is not intended to be exhaustive or limited to the invention in the form disclosed. Many modifications and variations will be apparent to those of ordinary skill in the art.

The scope of protection of the present invention is solely defined by the appended claims.

## Claims

1. A computer interface system, comprising:
a speech recognition mechanism; and
a graphical user interface providing
prompts that may specify the type of expected input and prompts that may specify words that are recognized by the system,
**characterized in that** the computer interface further comprising:
a microphone that receives audio input from a user; the graphical user interface displaying a list of all recognizable inputs at a point of a dialog and prompting the user for an expected input that the user can choose to speak at the designated point of the dialog according to a specified grammar.

2. The system according to claim 1, wherein prompts that represent non-terminal tokens in the grammar are replaced with one of a set of other prompts in the grammar in response to spoken input.

3. The system according to claim 1, wherein the graphical user interface is built automatically from a single dictionary and grammar specification.

4. The system according to claim 1, further comprising:
at least one speaker that provides audio prompts for expected inputs.

5. The system according to claim 1, wherein a prompt may further comprise a second graphical user interface window.

6. The system according to claim 1, wherein the graphical user interface further comprises a pull-down menu.

7. The system according to claim 1, further comprising a set of reserved words that activate specified prompts when spoken by the user.

8. A method for interfacing between a computer and a human user, the method comprising the computer implemented steps of:
receiving audio input from the user;
interpreting the audio input via speech recognition; and
displaying a graphical user interface providing prompts, that may specify the type of expected input;
and prompts that may specify words that are recognized by the system
**characterized in that** the graphical user interface displays a list of all recognizable inputs at a point of a dialog and prompts the user for an expected input that the user can choose to speak at the designated point of the dialog according to a specified grammar.

9. The method according to claim 8, wherein prompts that represent non-terminal tokens in the grammar are replaced with one of a set of other prompts in the grammar in response to spoken input.

10. The method according to claim 8, wherein the graphical user interface is built automatically from a single dictionary and grammar specification.

## Patentansprüche

1. Ein Computerschnittstellensystem, umfassend: einen Spracherkennungsmechanismus; und eine grafische Benutzeroberfläche, die Eingabeaufforderungen bereitstellt, die den Typ der erwarteten Eingabe spezifizieren können; und Eingabeaufforderungen, die Wörter spezifizieren können, die durch das System erkannt werden,
**dadurch gekennzeichnet, daß** die Computerschnittstelle außerdem umfaßt:
ein Mikrofon, das die Audio-Eingabe von einem Benutzer empfängt;
die grafische Benutzeroberfläche, die eine Liste aller erkennbaren Eingaben an einem Punkt eines Dialogs anzeigt, und den Benutzer zu einer erwarteten Eingabe auffordert, die der Benutzer auswählen kann, um am festgelegten Punkt des Dialogs gemäß einer vorgegeben Grammatik zu sprechen.

2. Das System nach Anspruch 1, in welchem Eingabeaufforderungen, die Nicht-Terminal-Zeichen in der Grammatik darstellen, durch eine eines Satzes von anderen Eingabeaufforderungen in der Grammatik als Reaktion auf gesprochene Eingabe ersetzen.

3. Das System nach Anspruch 1, in welchem die grafische Benutzeroberfläche automatisch von einer einzelnen Wörterbuch- und Grammatikspezifikation aufgebaut wird.

4. Das System nach Anspruch 1, außerdem umfassend: mindestens einen Lautsprecher, der Audio-Eingabeaufforderungen für erwartete Eingaben bereitstellt.

5. Das System nach Anspruch 1, in welchem eine Eingabeaufforderung außerdem ein zweites grafisches Benutzeroberflächenfenster umfassen kann.

6. Das System nach Anspruch 1, in welchem die grafische Benutzeroberfläche Außerdem ein Pull-Down-Menü umfaßt.

7. Das System nach Anspruch 1, außerdem umfassend einen Satz reservierter Wörter, die durch den Benutzer gesprochene, vorgegebene Eingabeaufforderungen aktivieren.

8. Ein Verfahren zum Anschließen zwischen einem Computer und einem menschlichen Benutzer, wobei das Verfahren die computerimplementierten Schritte umfaßt:
Empfangen der Audio-Eingabe vom Benutzer;
Interpretieren der Audio-Eingabe über Spracherkennung; und
Anzeigen einer grafischen Benutzeroberfläche, die Eingabeaufforderungen bereitstellt, die den Typ der erwarteten Eingabe spezifizieren können;
und Eingabeaufforderungen, die Wörter spezifizieren können, die durch das System erkannt werden,
**dadurch gekennzeichnet, daß** die grafische Benutzeroberfläche eine Liste aller erkennbaren Eingaben an einem Punkt eines Dialogs anzeigt und den Benutzer zu einer erwarteten Eingabe auffordert, die der Benutzer auswählen kann, um an festgelegten Punkten des Dialogs gemäß einer vorgegebenen Grammatik zu sprechen.

9. Das Verfahren nach Anspruch 8, in welchem Eingabeaufforderungen, die Nicht-Terminal-Zeichen in der Grammatik darstellen, durch eine eines Satzes von anderen Eingabeaufforderungen in der Grammatik als Reaktion auf gesprochene Eingabe ersetzen.

10. Das Verfahren nach Anspruch 8, in welchem die grafische Benutzeroberfläche automatisch von einer einzelnen Wörterbuch- und Grammatikspezifikation aufgebaut wird.

## Revendications

1. Système d'interface informatique, comprenant :
un mécanisme de reconnaissance de la parole ; et
une interface utilisateur graphique fournissant des invites de commande qui peuvent spécifier le type d'entrée attendue et des invites de commande qui peuvent spécifier les mots qui sont reconnus par le système,
**caractérisé en ce que** l'interface informatique comprend en outre :
un microphone qui reçoit des entrées audio d'un utilisateur ;
l'interface utilisateur graphique affichant une liste de toutes les entrées reconnaissables à un point du dialogue et invitant l'utilisateur à fournir une entrée attendue que l'utilisateur peut choisir de prononcer au point désigné du dialogue, selon une grammaire spécifiée.

2. Système selon la revendication 1, dans lequel les invites qui représentent des unités lexicales non terminales dans la grammaire sont remplacées par l'une d'un ensemble d'autres invites dans la grammaire en réponse à l'entrée vocale.

3. Système selon la revendication 1, dans lequel l'interface utilisateur graphique est développée automatiquement à partir d'une unique spécification de dictionnaire et de grammaire.

4. Système selon la revendication 1, comprenant en outre : au moins un haut-parleur qui fournit des invites audio pour des entrées attendues.

5. Système selon la revendication 1, dans lequel une invite peut en outre comprendre une seconde fenêtre d'interface utilisateur graphique.

6. Système selon la revendication 1, dans lequel l'interface utilisateur graphique comprend en outre un menu déroulant.

7. Système selon la revendication 1, comprenant en outre un ensemble de mots réservés qui activent des invites spécifiées lorsqu'ils sont prononcés par l'utilisateur.

8. Procédé d'interface entre un ordinateur et un utilisateur humain, le procédé comprenant les étapes suivantes mises en oeuvre par ordinateur :
réception d'une entrée audio de l'utilisateur ;
interprétation de l'entrée audio par reconnaissance vocale ; et
affichage d'une interface utilisateur graphique fournissant des invites de commande qui peuvent spécifier le type d'entrée attendue ;
et des invites de commande qui peuvent spécifier les mots qui sont reconnus par le système,
**caractérisé en ce que** l'interface utilisateur graphique affiche une liste de toutes les entrées reconnaissables à un point du dialogue et invite l'utilisateur à fournir une entrée attendue que l'utilisateur peut choisir de prononcer au point désigné du dialogue, selon une grammaire spécifiée.

9. Procédé selon la revendication 8, dans lequel les invites qui représentent des unités lexicales non terminales dans la grammaire sont remplacées par l'une d'un ensemble d'autres invites dans la grammaire en réponse à l'entrée vocale.

10. Procédé selon la revendication 8, dans lequel l'interface utilisateur graphique est développée automatiquement à partir d'une unique spécification de dictionnaire et de grammaire.
